**Europäisches Patentamt**

**European Patent Office**

**Office européen des brevets**

(19)

(11) Veröffentlichungsnummer : **0 355 885 B1**

(12)

# EUROPÄISCHE PATENTSCHRIFT

(45) Veröffentlichungstag der Patentschrift :
26.08.92 Patentblatt 92/35

(51) Int. Cl.⁵ : **C01G 3/02, A01N 59/20**

(21) Anmeldenummer : **89201961.3**

(22) Anmeldetag : **25.07.89**

(54) **Verfahren zur Herstellung von gelbem Kupferoxydul.**

(30) Priorität : **26.08.88 DE 3828935**

(43) Veröffentlichungstag der Anmeldung :
**28.02.90 Patentblatt 90/09**

(45) Bekanntmachung des Hinweises auf die
Patenterteilung :
**26.08.92 Patentblatt 92/35**

(84) Benannte Vertragsstaaten :
**AT BE CH DE ES FR GB GR IT LI LU NL SE**

(56) Entgegenhaltungen :
**DE-B- 1 020 010
US-A- 1 963 105
US-A- 2 474 533
US-A- 2 507 008
US-A- 2 586 579**

(73) Patentinhaber : **NORDDEUTSCHE AFFINERIE
AG
Alsterterrasse 2
W-2000 Hamburg 36 (DE)**

(72) Erfinder : **Hugk, Klaus Peter
Warlimontweg 12
W-2000 Hamburg 26 (DE)**
Erfinder : **Mrusek, Gerd
In de Huuk 10
W-2150 Buxtehude (DE)**
Erfinder : **Stelter, Michael, Dr.
Handweg 65
W-2100 Hamburg 90 (DE)**
Erfinder : **Winkler, Hermann, Dr.
Spiekeroogstrasse 19
W-4350 Recklinghausen (DE)**

(74) Vertreter : **Rieger, Harald, Dr.
Reuterweg 14
W-6000 Frankfurt am Main (DE)**

EP 0 355 885 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

**Beschreibung**

Die Erfindung betrifft ein Verfahren zur Herstellung von Kupferoxydul ($Cu_2O$) durch Einwirken einer wäßrigen mineralsauren Lösung und von sauerstoffhaltigem Gas auf kleinstückiges metallisches Kupfer unter ständigem Rühren in einem Reaktor.

Ein solches Verfahren ist aus DE-A-1 020 010 bekannt, wobei man bei Temperaturen nicht unter 90°C und einem Druck von 1 bis 7 bar arbeitet. Dabei entsteht Kupferoxydul mit Teilchengrößen von 1 μm oder höher.

Der Erfindung liegt die Aufgabe zugrunde, ein besonders feinteiliges Kupferoxydul bereitzustellen, das von heller, gelber Farbe ist und das als Pflanzenschutzmittel eingesetzt werden kann.

Die Erfindung löst die Aufgabe dadurch, daß man in einem offenen, kühlbaren Rührreaktor bei Temperaturen im Bereich von 10 bis 40°C arbeitet, wobei man pro Liter Lösung 200 bis 500 g kleinstückiges Kupfer einsetzt, und daß man aus dem Rührreaktor hellgelbes Kupferoxydul abzieht, dessen Teilchengrößen im Bereich von 0,05 bis 0,4 μm liegen. Vorzugsweise arbeitet man im Rührreaktor bei Temperaturen von 15 bis 35°C.

Das so hergestellte extrem feine Kupferoxydul besitzt eine hohe Schwebefähigkeit von mindestens 98 % (Schwebefähigkeit gemäß CIPAC-Handbuch, MT 15.1).

Zur Durchführung des Verfahrens der Erfindung einer drucklosen Rührlaugung wird in einem offenen, kühlbaren Rührreaktor, ausgestattet mit Bodenräumer und Begasungsrührer, Wasser vorgelegt. Unter Rühren wird stückiges metallisches Kupfer in Form von Drahtabschnitten oder Nuggets (Schüttdichte 2 bis 6 kg/l Cu) bis zu einem Durchmesser von 5 mm in einer Menge von 200 bis 500 g/l Suspension in den Rührbehälter eingegeben und ca. 0,50 g Mineralsäure pro l Suspension zugesetzt. Die Reihenfolge ist jedoch nicht zwingend. Unter Rühren, zweckmäßig mit einem gut suspendierenden Rührer oder Begasungsrührer, wird bei einer Umfangsgeschwindigkeit von 5 bis 15 m/sec. ein sauerstoffhaltiges Gas oder Sauerstoff in die Suspension eingeblasen. Die Temperatur wird vorzugsweise im Bereich von 15 bis 30°C gehalten.

Als Mineralsäuren werden zweckmäßig Chlorwasserstoff- oder Bromwasserstoffsäure eingesetzt. Es kann neben den Halogenwasserstoffsäuren auch Schwefelsäure verwendet werden. Um eine Mitfällung von basischem Kupfersulfat jedoch auszuschließen ist es zweckmäßig, eine organische Säure aus der Gruppe Ascorbinsäure, Ameisensäure und Essigsäure mitzuverwenden. Vorzugsweise wird Ascorbinsäure mitverwendet.

Die Kornfeinheit des gelben Kupferoxyduls des erfindungsgemäßen Verfahrens kann zusätzlich noch durch eine Erhöhung der Rührgeschwindigkeit oder einen Zusatz kolloider Stoffe in Richtung der Ausbildung sehr feiner Teilchen beeinflußt werden. Im allgemeinen beträgt die Laugungsgeschwindigkeit ca. 5 bis 10 g/l x h. Das Verfahren der Erfindung kann ansatzweise, wie auch kontinuierlich durchgeführt werden. Bei der ansatzweisen Ausführungsform des Verfahrens der Erfindung ist darauf zu achten, daß nach beendeter Laugung das gebildete gelbe Kupferoxydul sofort abfiltriert wird, da ein längeres Stehen der $Cu_2O$-Suspension zur Vergrößerung des Kornspektrums um 0,5 bis 1 μm und damit zu einer Farbänderung bzw. Farbvertiefung des $Cu_2O$ führt.

Aufgrund der Feinheit und hohen Schwebefähigkeit des erfindungsgemäß hergestellten gelben Kupferoxyduls eignet sich dieses in ganz besonderer Weise als Wirkstoff in Pflanzenschutzmitteln. Beispielsweise haben derartige Mittel unter Verwendung des gelben Kupferoxyduls eine Zusammensetzung von ca. 56 Gew.-% $Cu_2O$, 42 Gew.-% Kreide, 2 Gew.-% Zellpech.

Die Erfindung wird anhand der nachstehenden Beispiele näher und beispielhaft erläutert.

Beispiel 1

In einen offenen Rührreaktor von 15 m³ Inhalt, ausgestattet mit Bodenräumer, Kühleinrichtung und Begasungsrührer, wurden 10 m³ Wasser eingefüllt und hierin 2,77 t Kupferdrahtabschnitte (Schüttgewicht 4 kg/l, Durchmesser 2 bis 5 mm, Länge 2 bis 10 mm) unter Rühren suspendiert. Der Suspension wurden sodann Salzsäure und Schwefelsäure zugesetzt, so daß die Suspension 0,25 g/l HCl und 0,5 g/l $H_2SO_4$ enthielt. Unter intensivem Rühren (72 Upm) wurde in die Suspension Sauerstoff eingeleitet (2 bis 5 l $O_2$/h x 1 Suspension). Während der Laugung wurde eine Temperatur von 30°C aufrecht erhalten. Nach 6 Stunden war die Laugungsreaktion beendet. Die Lösungsgeschwindigkeit betrug 7,1 g $Cu_2O$/l x h. Mit einem Tauchrohr, das am unteren Ende durch ein feinmaschiges Sieb verschlossen ist, wurde die Kupferoxydulsuspension abgesaugt und auf einer Kammerfilterpresse abfiltriert. Das Reaktionsprodukt bestand aus gelbem Kupferoxydul mit mehr als 95 % $Cu_2O$ einer Kornfeinheit von 0,1 bis 0,3 μm und einer Schwebefähigkeit von 99 % (nach CIPAC-Handbuch, MT 15.1).

Beispiel 2

In einem offenen Rührkessel (15 m³), augestattet mit Bodenräumer, Kühlung sowie Begasungsvorrichtung, wurden 10 m³ Wasser eingebracht und hierin 2,8 t Kupferdrahtabschnitte (wie in Beispiel 1) suspendiert. Es wurden 16,3 l 30%ige Salzsäure sowie 55 kg Ascorbinsäure zugesetzt. Unter kräftigem Rühren (ca. 80 Upm) wurde die Suspension mit Sauerstoff begast (3,4 l O₂/h x 1 Suspension). Die Laugung wurde bei 30°C durchgeführt, die Laugungsgeschwindigkeit betrug nach 6 Stunden 5,1 g Cu₂O/l x h, wobei ein sehr feines, gelbes Kupferoxydul mit einer Kornverteilung von 0,05 bis 0,1 µm erhalten wurde. Die Abtrennung des Kupferoxyduls von der restlichen Suspension erfolgte wie in Beispiel 1. Das Produkt hatte eine Schwebefähigkeit von besser als 99 % (nach CIPAC).

## Patentansprüche

1. Verfahren zur Herstellung von Kupferoxydul (Cu₂O) durch Einwirken einer wäßrigen mineralsauren Lösung und von sauerstoffhaltigem Gas auf kleinstückiges metallisches Kupfer unter ständigem Rühren in einem Reaktor, dadurch gekennzeichnet, daß man in einem offenen, kühlbaren Rührreaktor bei Temperaturen im Bereich von 10 bis 40°C arbeitet, wobei man pro Liter Lösung 200 bis 500 g kleinstückiges Kupfer einsetzt, und daß man aus dem Rührreaktor hellgelbes Kupferoxydul abzieht, dessen Teilchengrößen im Bereich von 0,05 bis 0,4 µm liegen.

2. Verfahren nach Anspruch 1, dadurch gekennzeichnet, daß man im Rührreaktor bei Temperaturen im Bereich von 15 bis 35°C arbeitet.

3. Verfahren nach Anspruch 1 oder 2, dadurch gekennzeichnet, daß als Mineralsäure Chlorwasserstoff- oder Bromwasserstoffsäure eingesetzt wird.

4. Verfahren nach einem der Ansprüche 1 bis 3, dadurch gekennzeichnet, daß zusätzlich eine organische Säure aus der Gruppe Ameisensäure, Essigsäure und Ascorbinsäure verwendet wird.

## Claims

1. Method for producing cuprous oxide (Cu₂O) by the action of an aqueous mineral acid solution and of oxygen-containing gas on small-sized metallic copper during continuous agitation in a reactor, characterised in that the operation takes place in an open agitator reactor, which can be cooled, at temperatures in the range of 10 to 40°C, with 200 to 500 g of small-sized copper being used per litre of solution, and that light yellow cuprous oxide with particle sizes in the range of 0.05 to 0.4 µm is removed from the agitator reactor.

2. Method according to claim 1, characterised in that the operating temperatures in the agitator reactor are in the range of 15 to 35°C.

3. Method according to claim 1 or 2, characterised in that the mineral acid which is used is hydrochloric or hydrobromic acid.

4. Method according to one of claims 1 to 3, characterised in that an organic acid from the formic acid, acetic acid and ascorbic acid group is additionally used.

## Revendications

1. Procédé de préparation d'oxyde cuivreux (Cu₂O) par action d'une solution aqueuse d'acide minéral et de gaz contenant de l'oxygène sur du cuivre métallique en petits morceaux sous agitation permanente dans un réacteur, caractérisé en ce qu'il consiste à opérer dans un réacteur à agitation ouvert et pouvant être refroidi, à des températures de l'ordre de 10 à 40°C, en utilisant de 200 à 500 grammes de cuivre en petits morceaux par litre de solution et à retirer du réacteur à agitation de l'oxyde cuivreux jaune clair dont la granulométrie est comprise entre 0,05 et 0,4 µm.

2. Procédé suivant la revendication 1, caractérisé en ce qu'il consiste à opérer dans un réacteur à agitation à des températures de l'ordre de 15 à 35°C.

3. Procédé suivant la revendication 1 ou 2, caractérisé en ce qu'il consiste à utiliser comme acide minéral de l'acide chlorhydrique ou de l'acide bromhydrique.

4. Procédé suivant l'une des revendications 1 à 3, caractérisé en ce qu'il consiste à utiliser, en outre, un acide organique choisi parmi l'acide formique, l'acide acétique et l'acide ascorbique.